Europäisches Patentamt

European Patent Office

Office européen des brevets

(19)

(11) Veröffentlichungsnummer : **0 187 228**
**B1**

(12) **EUROPÄISCHE PATENTSCHRIFT**

(45) Veröffentlichungstag der Patentschrift :
13.12.89

(51) Int. Cl.⁴ : **B 60 B 7/06**

(21) Anmeldenummer : 85114510.2

(22) Anmeldetag : 15.11.85

(54) Rad-Zierblende für Kraftfahrzeuge.

(30) Priorität : 22.12.84 DE 8437752 U
28.06.85 DE 8518790 U

(43) Veröffentlichungstag der Anmeldung :
16.07.86 Patentblatt 86/29

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
DE--A-- 3 137 319
DE--A-- 3 238 259
US--A-- 4 461 514

(73) Patentinhaber : Leichtmetall-Auto-Zubehör Walter
H.S. Albrecht GmbH & Co. KG
Kochstrasse 56
D-4150 Krefeld (DE)

(72) Erfinder : Die Erfinder haben auf ihre Nennung
verzichtet

(74) Vertreter : Stark, Walter, Dr.-Ing.
Moerser Strasse 140
D-4150 Krefeld (DE)

## Beschreibung

Die Erfindung betrifft eine auf eine Radfelge mit umlaufender Innenschulter aufklemmbare Zierblende für Kraftfahrzeuge, insbesondere Personenkraftwagen, bestehend aus einer kreisförmigen Kunststoff-Abdeckscheibe mit mehreren metallischen Klemmelementen, welche gleichmäßig über den Umfang verteilt in der Scheibe verankert sind und mit Klemmzungen kraftschlüssig an der Innenschulter der Felge festklemmbar sind, wobei die Klemmelemente radial einwärts auf einem zum Scheibenmittelpunkt konzentrischen, metallischen Stützring abgestützt sind, und der Stützring durch an den Klemmelementen angeformte Halterungsansätze an der Scheibe fixiert ist.

Die meisten Zierblenden für Kraftfahrzeuge sind in ihrem Aufbau auf einen speziellen Wagentyp zugeschnitten. Dabei sind felgenseitig Vorsprünge, Nuten oder dergleichen vorgesehen, an denen die Blende formschlüssig befestigt werden kann. Diese Befestigungsmöglichkeiten sind aber bei den verschiedenen Wagentypen sehr abweichend voneinander ausgebildet.

Zierblenden, welche allein kraftschlüssig an einer Felge festklemmbar sind, basieren auf der Tatsache, daß Kraftfahrzeugfelgen einer Größenklasse auch bei verschiedener Bauart stets denselben Innenschulterdurchmesser haben, d. h. derartige Zierblenden können für die verschiedensten Wagentypen benutzt werden. Eine kraftschlüssige Verbindung zwischen Felge und Zierblende setzt allerdings sehr hohe Haltekräfte der metallischen Klemmzungen voraus, damit sich die Zierblende auf unebener Straße oder dergleichen nicht von der Felge löst. Bei den bekannten Zierblenden werden zwar im Normalfall ausreichende Haltekräfte erreicht, doch hat es sich gezeigt, daß sie sich bei häufigem, kurz aufeinanderfolgendem, starkem Bremsen dennoch lösen können. Ursache ist die starke Erhitzung des Felgenkörpers auf Temperaturen von mehr als 100°C, wodurch die Kunststoff-Abdeckscheibe an der Verankerung der metallischen Klemmelemente — meist unter dauerhafter plastischer Verformung — nachgibt und somit die Haltekräfte stark zurückgehen.

Aus der DE-A-31 37 319 ist eine gattungsgemäße Zierblende in einer Ausführung für eine spezielle Felgenform bekannt. Die Montage dieser Zierblende ist verhältnismäßig aufwendig, so daß ausschließlich eine werksseitige Montage oder eine Werkstattmontage möglich ist. Im übrigen sind aus der DE-A-32 38 259 Zierblenden für Radfelgen einer Größenklasse unterschiedlicher Kraftfahrzeuge bekannt. Sie können in der Regel vom Kraftfahrzeugbenutzer selbst montiert werden. Auch diese Zierblenden besitzen einen Stützring, der aber praktisch nur an den Klemmelementen eingespannt und gehalten ist, woraus sich wiederum Montageprobleme ergeben.

Aufgabe der Erfindung ist es, eine einfach montierbare Zierblende zu schaffen, deren Halterungskräfte auch bei starker Erhitzung der Felge aufrechterhalten bleiben.

Diese Aufgabe wird dadurch gelöst, daß die Klemmelemente längliche Blechstreifen sind, welche in axialen, spaltförmigen Schächten der Abdeckscheibe eingeschoben und verankert sind, daß das freie, aus dem Schacht herausragende Ende jedes Klemmelementes um mehr als 90° zu einer federnden, nach außen gerichteten Klemmzunge umgebogen ist, daß der Halterungsansatz für den Stützring eine aus dem Blech des Klemmelementes herausgedrückte Nase ist, und daß jeder Verankerungs-Schacht an seinem Eintritt einen im Umfangsrichtung der Scheibe verlaufenden Schlitz aufweist, in welchen der Stützring eingelegt ist, wobei der Halterungsansatz des Klemmelementes den Schlitz an seiner offenen Seite versperrt.

Die Teile dieser Zierblende können sehr einfach zusammengesetzt werden. Basis kann dabei die Abdeckscheibe sein, auf die der Stützring so aufgelegt wird, daß er in den Schlitz der Verankerungs-Schächte eingreift. Durch Einstecken der Klemmelemente in die VerankerungsSchächte wird nicht nur die Zierblende komplettiert, sondern gleichzeitig auch der Stützring formschlüssig daran festgelegt. Die fertige Zierblende läßt sich dann ohne weiteres in die Innenschulter einer Radfelge einsetzen. Das erfordert weder besondere Werkzeuge noch fachkundiges Personal. Damit ist der Stützring nicht nur an der Scheibe fixiert, sondern bildet während des Betriebes auch ein hinreichend festes Widerlager für die an der Innenschulter der Radfelge abgestützten Klemmelemente. Er behält stets eine zum Scheibenmittelpunkt konzentrische Lage. Bei diesem Aufbau der Zierblende kann die Abdeckscheibe nach wie vor vollständig aus Kunststoff bestehen, so daß die Vorteile einer absoluten Korrosionsbeständigkeit und einer bequemen Reinigung erhalten bleiben.

Gemäß der Erfindung kann der Halterungsansatz in der Nähe der Biegezone der Klemmzunge angeordnet und in Richtung auf den Scheibenmittelpunkt aus dem Klemmelement herausgedrückt sein und kann der Stützring auf der dem Scheibenmittelpunkt zugewandten Seite am Klemmelement anliegen. Damit erhält die als Halterungsansatz für den Stützring dienende Nase eine reine Sicherungsfunktion und muß bei einer höheren thermischen Beanspruchung der Felge selbst keinerlei Kräfte vom Stützring auf das Klemmelement übertragen, so daß die Ausbildung als dünne Blechlasche vollkommen genügt. Durch die Anordnung der Nase in der Nähe der Biegezone der Klemmzunge können die Klemmelemente nahezu vollständig in die VerankerungsSchächte der Abdeckscheibe eingeschoben werden. Lediglich am Schachteintritt muß ein gewisser freier Raum für den Stützring verbleiben.

Nach einer alternativen Ausführungsform der Erfindung kann der Halterungsansatz den Stützring hakenförmig umschließen. Bei dieser Ausführungsform wird durch Aufschnappen des hakenförmigen Halterungsansatzes auf den Stützring dessen eindeutig definierte Positionierung erreicht.

In Ausgestaltung der Erfindung können der Stützring und die Abstützenden der Klemmzungen in etwa in derselben Radialebene liegen. Damit ist sichergestellt, daß bei einer hohen thermischen Belastung der Felge die radialen Klemmkräfte der Klemmzungen unmittelbar auf den Stützring wirken, d. h. es treten an den Klemmelementen praktisch keine zusätzlichen Drehmomente auf, die zu einer Verformung der Kunststoff-Verankerung in der Scheibe führen könnten. Die Klemmelemente bleiben somit stets in ihrer ursprünglichen Lage.

Eine weitere Ausführung ist dadurch gekennzeichnet, daß die Klemmzunge im Anschluß an die Abbiegung bogenartig mit gleicher, jedoch kleinerer Krümmung ausgebildet ist, wobei das freie Ende der Klemmzunge als dem Halteende gegenüberliegender Stützfuß geformt ist und die Klemmzunge im Bereich zwischen der Abbiegung und ihrem größten Abstand vom Halteende Halteansätze aufweist, die vom Halteende weggerichtet sind.

Bei Einsatz dieses Klemmelementes werden die erforderlichen Klemmkräfte nicht allein durch Biegung im Bereich der Abbiegung erzeugt, sondern auch vom Stützfuß, der sich bei montierter Abdeckscheibe auf einer der Innenschulter der Radfelge gegenüberliegenden Fläche der Abdeckscheibe abstützt. Die Verformung im Bereich der Abbiegung bleibt dadurch geringer. Das Klemmelement kann insgesamt aus dünnerem Blech hergestellt sein. Die Halteansätze im Bereich des größten Abstandes der Klemmzunge greifen an der Innenschulter der Felge an und halten die Abdeckscheibe an der Radfelge.

Bei einer bevorzugten Ausführung entspricht die Länge der Klemmzunge etwa der Länge des Halteendes. Die Länge der Klemmzunge kann aber auch den jeweils gegebenen Umständen angepaßt werden.

Zweckmäßig werden die Halteansätze dreieckförmig sowie aus dem Bereich der Seitenränder der Klemmzunge abgebogen. Dann besitzen die Halteansätze jeder Klemmzunge einen hinreichend großen Abstand, so daß jeder Halteansatz eigene Haltekräfte aufbringen kann.

Bei diesem Klemmelement können die Haltekräfte aber auch dadurch eingestellt werden, daß die Klemmzunge im Bereich zwischen den Halteansätzen und dem Stützfuß eine verringerte Breite besitzt. Unabhängig davon oder zusätzlich kann die Klemmzunge im Bereich zwischen den Halteansätzen und dem Stützfuß einen Längsschlitz aufweisen. Mit diesen Maßnahmen lassen sich die Kräfte, mit denen die Halteansätze gegen die Innenschulter der Felge gedrückt werden, in einem weiten Bereich beeinflussen.

Die Erfindung wird im folgenden anhand der Zeichnung näher erläutert; es zeigen :

Fig. 1 eine Rückansicht auf eine Zierblende ohne Klemmelemente,

Fig. 2 die Zierblende gemäß einem Schnitt II-II in Fig. 1,

Fig. 3 die Verankerung eines Klemmelementes in der Zierblende gemäß einem Ausschnitt III in Fig. 2,

Fig. 4 ein Klemmelement in perspektivischer Darstellung,

Fig. 5 einen Verankerungs-Schacht ohne eingeschobenes Klemmelement in einer analogen Darstellung zu Fig. 3,

Fig. 6 die Verankerung eines Klemmelementes gemäß einem Schnitt VI-VI in Fig. 3,

Fig. 7 eine zweite Ausführungsform der Befestigung von Klemmelementen und Stützring in einer analogen Darstellung zu Fig. 3.

Fig. 8 einen Schnitt in Richtung II-II durch eine andere Ausführung des Gegenstandes nach Fig. 1,

Fig. 9 eine Draufsicht auf das Halteende eines Klemmelementes nach Fig. 8,

Fig. 10 eine Seitenansicht eines Klemmelementes nach Fig. 8,

Fig. 11 eine Draufsicht auf die Klemmzunge eines Klemmelementes nach Fig. 8.

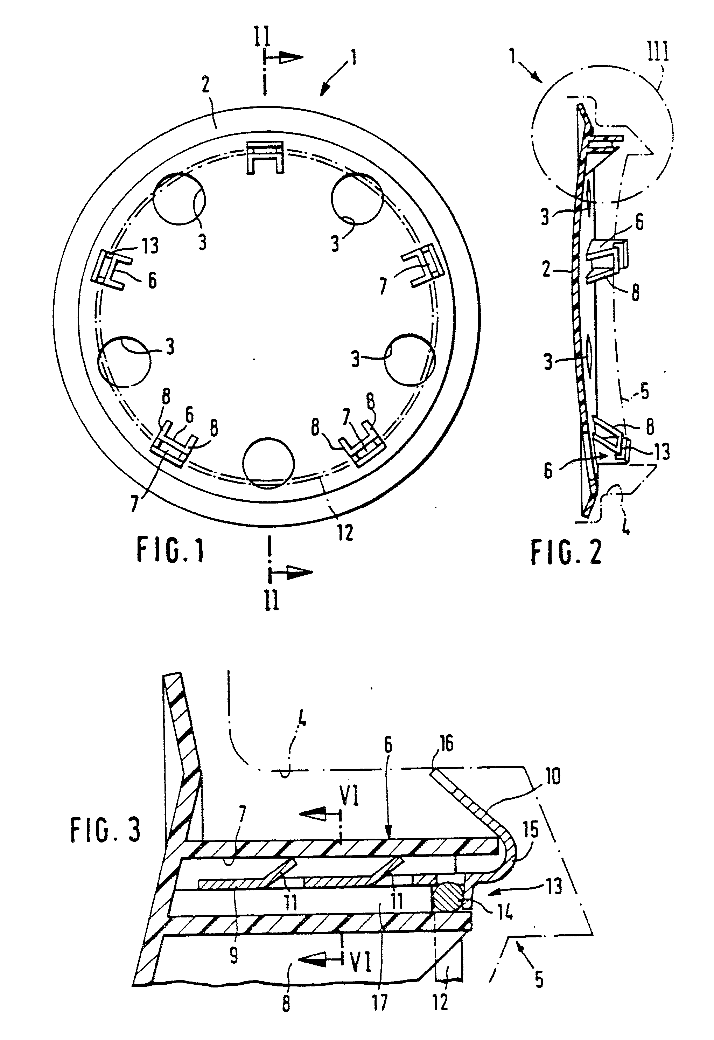

Die Figuren 1 und 2 zeigen in einer Gesamtansicht eine Zierblende 1, insbesondere für Personenkraftwagen, deren Grundkörper aus einer kreisförmigen, leicht gewölbten Abdeckscheibe 2 aus Kunststoff besteht. Die Abdeckscheibe 2 kann zur Verzierung mehrere Durchbrüche 3 oder dergleichen aufweisen. Die Zierblende 1 ist an der umlaufenden Innenschulter 4 einer strichpunktiert angedeuteten Radfelge 5 kraftschlüssig festklemmbar. Im Randbereich der Scheibe 2 sind, gleichmäßig über den Umfang verteilt, mehrere Befestigungsvorsprünge 6 mit jeweils einem axialen, spaltförmigen Schacht 7 und mit Stützrippen 8 angeformt. Wie die Figuren 3 bis 6 näher zeigen, ist in jeden Schacht 7 ein Klemmelement 9 in Form eines länglichen Blechstreifens eingeschoben, dessen freies, aus dem Schacht 7 herausragendes Ende um mehr als 90° zu einer federnden Klemmzunge 10 umgebogen ist. Aus dem Klemmelement 9 sind im Bereich des Schachtes 7 zwei Widerhaken 11 herausgedrückt, die für eine feste Verankerung des Klemmelementes 9 im Schacht 7 sorgen. Die Klemmzunge 10 kann daher beim Einschieben der Zierblende 1 in die Felge 5 unter so hohe Vorspannung gesetzt werden, daß eine einwandfreie, kraftschlüssige Festklemmung an der Innenschulter 4 gegeben ist.

Um auch bei hohen thermischen Belastungen der Felge 5 eine Verformung der Befestigungsvorsprünge 6 und damit eine Verminderung der Haltekräfte zwischen Klemmzunge 10 und Innenschulter 4 zu verhindern, sind die Klemmelemente 9 radial einwärts auf einem zum Scheibenmittelpunkt konzentrischen, metallischen Stützring 12 abgestützt, dessen Lage in Figur 1 in strichpunktierter Form skizziert ist. Der Stützring 12 ist in Schlitze 13 eingelegt, welche am Eintritt jedes Verankerungsschachtes 7 vorgesehen und in Umfangsrichtung der Scheibe 2 orientiert sind. Der Stützring 12 kann bei der Montage der Zierblende 1 provisorisch in die Schlitze 13 eingelegt werden und wird endgültig durch an den Klemmelementen 9 angeformte Halterungsansätze 14 in seiner Lage fixiert.

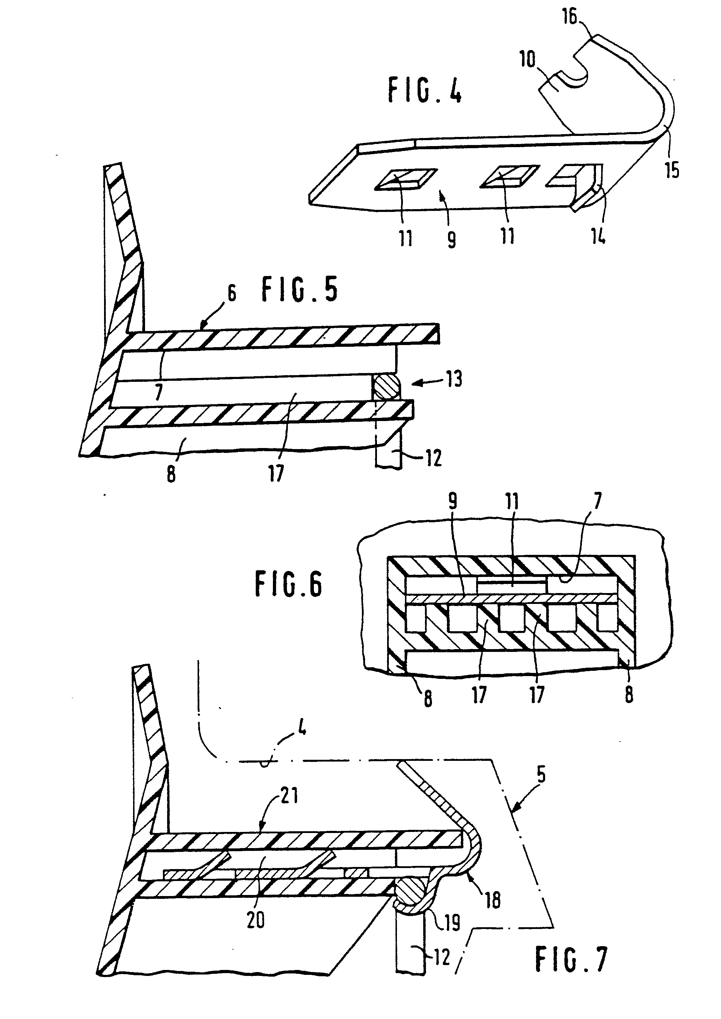

In dem Ausführungsbeispiel nach den Figuren 3 und 4 ist der Halterungsansatz 14 eine etwa rechtwinklig zum Scheibenmittelpunkt aus dem Blech des Klemmelementes 9 herausgedrückte Nase, welche jeweils den Umfangs-Schlitz 13 an seiner offenen Seite versperrt. Der Halterungsansatz 14 befindet sich somit in der Nähe der Biegezone 15 der Klemmzunge 10, und der Stützring 12 liegt auf der dem Scheibenmittelpunkt zugewandten Seite am Klemmelement 9 unmittelbar an. Der Stützring 12 und die Abstützenden 16 der Klemmzungen 10 an der Innenschulter 4 liegen dabei etwa in derselben Radialebene, so daß die radialen Klemmkräfte der Klemmzunge 10 unmittelbar auf den Stützring 12 übertragen werden können.

Der Schacht 7 ist bei dem Ausführungsbeispiel nach den Figuren 3, 5 und 6 in Richtung auf den Scheibenmittelpunkt hin erweitert, um genügend Raum zur Aufnahme des Stützrings 12 auf der dem Scheibenmittelpunkt zugewandten Seite des Klemmelementes 9 zu gewinnen. Um gleichzeitig eine sichere Verankerung der Klemmelemente 9 durch die Widerhaken 11 zu gewährleisten, ist der Schachtquerschnitt jedoch etwa zur Hälfte durch mehrere Längsrippen 17 versperrt, an deren Stirnenden der Stützring 12 anliegt.

Figur 7 zeigt ein zweites Ausführungsbeispiel eines Klemmelementes 18, bei welchem der Halterungsansatz 19 für den Stützring 12 eine hakenförmige, aus dem Klemmelement 18 herausgedrückte Nase ist, welche den Stützring 12 teilweise umschließt. Bei diesem Ausführungsbeispiel ist die Weite des Verankerungs-Schachtes 20 unmittelbar an das Klemmelement 18 angepaßt, während der Stützring 12 außerhalb des Schachtes 20 am Befestigungsvorsprung 21 für das Klemmelement 18 anliegt. Auch in diesem Fall würde allerdings eine Halterung für den Stützring 12 genügen, die analog zum Ausführungsbeispiel nach den Figuren 3 und 4 lediglich rechtwinklig aus dem Klemmelement herausgedrückt ist. Die Zentrierung des Ringes 12 wäre auch dann durch die gleichmäßig über den Umfang verteilten Klemmelemente gewährleistet.

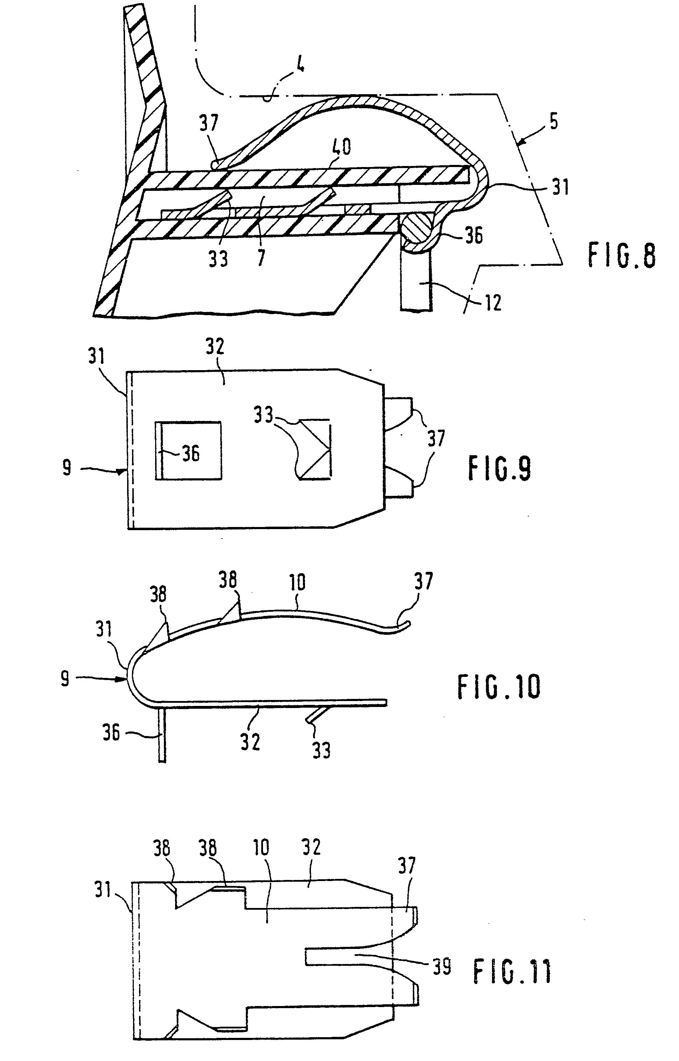

Bei der Ausführung nach den Figuren 8 bis 11 sind die Klemmelemente 9 radial einwärts auf dem zum Scheibenmittelpunkt konzentrischen, metallischen Stützring 12 abgestützt, dessen Lage in Figur 1 in strichpunktierter Form skizziert ist.

Wie man insbesondere aus den Figuren 8 bis 11 entnimmt, ist die Klemmzunge 10 jedes Klemmelementes 9 im Anschluß an die Abbiegung 31 bogenartig mit gleicher, jedoch kleinerer Krümmung als die Abbiegung 31 ausgebildet. Das freie Ende der Klemmzunge 10 ist als ein dem Halteende 32 gegenüberliegender Stützfuß 37 geformt, bei der dargestellten Ausführung als Abbiegung mit entgegengesetzter Krümmung. Ferner weist jede Klemmzunge 10 im Bereich zwischen der Abbiegung 31 und ihrem größten Abstand vom Halteende 32 als Widerhaken 38 ausgebildete Halteansätze auf, die vom Halteende 32 weggerichtet sind. Die Länge jeder Klemmzunge 10 entspricht etwa der Länge des zugeordneten Halteendes 32. Die Halteansätze bzw. Widerhaken 38 sind dreieckförmig ausgebildet und aus dem Bereich der Seitenränder der Klemmzunge 10 abgebogen.

Bei der dargestellten Ausführung besitzt die Klemmzunge 10 ferner im Bereich zwischen den Widerhaken 38 und dem Stützfuß 37 eine verringerte Breite. Durch Wahl einer entsprechenden Breite kann die Klemmwirkung jeder Klemmzunge 10 eingestellt werden. Weitere Einstellmöglichkeiten ergeben sich, wenn die Klemmzunge 10, wie dargestellt, im Bereich zwischen den Widerhaken 38 und dem Stützfuß 37 einen mehr oder weniger langen Längsschlitz 39 aufweist, der sich im Bereich des Stützfußes 37 öffnet.

Figur 8 läßt erkennen, wie sich die Klemmelemente 9 bei montierter Abdeckscheibe 2 zwischen der Innenschulter 4 der Radfelge 5 und einer der Innenschulter 4 gegenüberliegenden Stützfläche 40 der Abdeckscheibe 2 verspannen. Die Klemmzunge 10 greift mit ihrem am weitesten vom Halteende 32 entfernten Abschnitt bzw. mit ihren Widerhaken 38 an der Innenschulter 4 der Radfelge 5 an. Gleichzeitig stützt sich der Stützfuß 37 auf der Stützfläche 40 ab, die von der Außenseite einer Wandung des Schachtes 7 gebildet wird. Die Klemmkräfte werden nicht nur durch Federkräfte der Klemmzunge 10, sondern auch durch Stützkräfte des Stützfußes 37 aufgebracht.

## Patentansprüche

1. Auf eine Radfelge mit umlaufender Innenschulter aufklemmbare Zierblende (1) für Kraftfahrzeuge, insbesondere Personenkraftwaren, bestehend aus einer kreisförmigen Kunststoff-Abdeckscheibe (2) mit mehreren metallischen Klemmelementen (9), welche gleichmäßig über den Umfang verteilt in der Scheibe verankert sind und mit Klemmzungen (10) kraftschlüssig an der Innenschulter (4) der Felge (5) festklemmbar sind, wobei die Klemmelemente (9) radial einwärts auf einem zum Scheibenmittelpunkt konzentrischen, metallischen Stützring (12) abgestützt sind, und der Stützring (12) durch an den Klemmelementen (9) angeformte Halterungsansätze (14) an der Scheibe (2) fixiert ist, dadurch gekennzeichnet, daß die Klemmelemente (9) längliche Blechstreifen sind, welche in axialen, spaltförmigen Schächten (7) der Abdeckscheibe (2) eingeschoben und verankert sind, daß das freie, aus dem Schacht (7) herausragende Ende jedes Klemmelementes (9) um mehr als 90° zu einer federnden, nach außen gerichteten Klemmzunge (10) umgebogen ist, daß der Halterungsansatz (14) für den Stützring (12) eine aus dem Blech des Klemmelementes (9) herausgedrückte Nase ist, und daß jeder Verankerungs-Schacht (7) an seinem Eintritt einen in Umfangsrichtung der Scheibe (2) verlaufenden Schlitz (13) aufweist, in welchen der Stützring (12) eingelegt ist, wobei der Halterungsansatz (14) des Klemmelementes (9) den Schlitz (13) an seiner offenen Seite versperrt.

2. Zierblende nach Anspruch 1, dadurch gekennzeichnet, daß der Halterungsansatz (14) in der Nähe der Biegezone (15) der Klemmzunge (10) angeordnet und in Richtung auf den Scheibenmittelpunkt aus dem Klemmelement (9) herausgedrückt ist und daß der Stützring (12) auf der dem Scheibenmittelpunkt zugewandten Seite am Klemmelement (9) anliegt.

3. Zierblende nach Anspruch 1, dadurch gekennzeichnet, daß der Halterungsansatz (19) den Stützring (12) hakenförmig umschließt.

4. Zierblende nach einem oder mehreren der Ansprüche 1-3, dadurch gekennzeichnet, daß der Stützring (12) und die Abstützenden (16) der Klemmzungen (10) in etwa derselben Radialebene liegen.

5. Zierblende nach einem der Ansprüche 1-4, dadurch gekennzeichnet, daß die Klemmzunge (10) im Anschluß an die Abbiegung (31) bogenartig mit gleicher, jedoch kleinerer Krümmung ausgebildet ist, wobei das freie Ende der Klemmzunge (10) als dem Halteende (32) gegenüberliegender Stützfuß (37) geformt ist und die Klemmzunge (10) im Bereich zwischen der Abbiegung (31) und ihrem größten Abstand vom Halteende (32) Halteansätze (38) aufweist, die vom Halteende (32) weggerichtet sind.

6. Zierblende nach Anspruch 5, dadurch gekennzeichnet, daß die Länge der Klemmzunge (10) etwa der Länge des Halteendes (32) entspricht.

7. Zierblende nach Anspruch 5 oder 6, dadurch gekennzeichnet, daß die Halteansätze (38) dreieckförmig sowie aus dem Bereich der Seitenränder der Klemmzunge (10) abgebogen sind.

8. Zierblende nach einem der Ansprüche 5-7, dadurch gekennzeichnet, daß die Klemmzunge (10) im Bereich zwischen den Halteansätzen (38) und dem Stützfuß (37) eine verringerte Breite besitzt.

9. Zierblende nach einem der Ansprüche 5-8, dadurch gekennzeichnet, daß die Klemmzunge (10) im Bereich zwischen den Halteansätzen (38) und dem Stützfuß (37) einen Längsschlitz (39) aufweist.

## Claims

1. Decorative wheel trim (1) for motor vehicles, especially passenger vehicles, which is clampable onto a wheel rim with a circumferential inner shoulder, comprising a circular plastics material cover disc (2), provided with a plurality of metallic clamping elements (9), which are secured in the disc and are uniformly distributed over the circumference thereof, and said clamping elements are securely clampable, in a force-locking manner, on the inner shoulder (4) of the rim (5) by means of clamping tongues (10), the clamping elements (9) being supported radially inwardly on a metallic supporting ring (12), which is concentric with the centre of the disc, and the supporting ring (12) is fixed on the disc (2) by means of retaining lugs (14), which are fitted on the clamping elements (9), characterised in that the clamping elements (9) are elongate strips of sheet metal which are inserted and secured in axial, slotted channels (7) of the cover disc (2), in that the free end of each clamping element (9) protruding from the channel (7) is bent through more than 90° relative to a resilient, outwardly directed clamping tongue (10), in that the retaining lug (14) for the supporting ring (12) is a projection member which has been pressed out of the sheet metal of the clamping element (9), and in that each securing channel (7) has, at its inlet, a slot (13), which extends in the circumferential direction of the disc (2) and in which the supporting ring (12) is inserted, the retaining lug (14) of the clamping element (9) obstructing the slot (13) at its open end.

2. Decorative wheel trim according to claim 1, characterised in that the retaining lug (14) is disposed in the vicinity of the bending zone (15) of the clamping tongue (10) and is pressed out of the clamping element (9) in the direction of the centre of the disc, and in that the supporting ring (12) abuts against the clamping element (9) on the side facing the centre of the disc.

3. Decorative wheel trim according to claim 1, characterised in that the retaining lug (19) surrounds the supporting ring (12) in a hook-like manner.

4. Decorative wheel trim according to one or more of claims 1-3, characterised in that the supporting ring (12) and the supporting ends (16) of the clamping tongues (10) lie substantially in the same radial plane.

5. Decorative wheel trim according to any of claims 1-4, characterised in that the clamping tongue (10), subsequent to the bent-over portion (31), is arcuate, with an identical, but smaller curvature, the free end of the clamping tongue (10) being shaped as a supporting foot (37), which is situated opposite the retaining end (32), and, in the region between the bent-over portion (31) and its greatest distance from the retaining end (32), the clamping tongue (10) has locking extensions (33) which are directed away from the retaining (32).

6. Decorative wheel trim according to claim 5, characterised in that the length of the clamping tongue (10) corresponds substantially to the length of the retaining end (32).

7. Decorative wheel trim according to claim 5 or 6, characterised in that the locking extensions (38) are triangular and are bent out from the region of the lateral edges of the clamping tongue (10).

8. Decorative wheel trim according to any of claims 5-7, characterised in that the clamping tongue (10) has a reduced width in the region between the locking extensions (38) and the supporting foot (37).

9. Decorative wheel trim according to any of claims 5-8, characterised in that the clamping tongue (10) has an elongate slot (39) in the region between the locking extensions (38) and the supporting foot (37).

## Revendications

1. Enjoliveur (1) destiné à des véhicules automobiles, notamment à des voitures particulières, pouvant être enclipsé sur une jante de roue à épaulement interne périphérique, et constitué d'un disque circulaire de recouvrement (2) en matière plastique muni de plusieurs éléments métalliques de coincement (9) qui sont ancrés dans le disque, avec répartition uniforme sur le pourtour, et peuvent être bloqués mécaniquement à demeure, par des languettes de coincement (10), sur l'épaulement interne (4) de la jante (5), les éléments de coincement (9) prenant appui, radialement vers l'intérieur, sur une bague métallique de soutien (12) coïncidant avec le centre du disque, et cette bague de soutien (12) étant assujettie au disque (2) par l'intermédiaire d'appendices de retenue (14) ménagés solidairement sur les éléments de coincement (9), caractérisé par le fait que les éléments de coincement (9) sont des bandes en tôle longilignes, introduites et ancrées dans des cavités axiales (7) du disque de recouvrement (2), configurées en des interstices ; par le fait que l'extrémité libre de chaque élément de coincement (9), dépassant de la cavité (7), est cintrée de plus de 90° pour former une languette élastique de coincement (10) dirigée vers l'extérieur ; par le fait que l'appendice de retenue (14) destiné à la bague de soutien (12) est un mentonnet repoussé hors de la tôle constituant l'élément de coincement (9) ; et par le fait que chaque cavité d'ancrage (7) comporte, à son entrée, une fente (13) qui s'étend dans le sens circonférentiel du disque (2) et dans laquelle la bague de soutien (12) est engagée, l'appendice de retenue (14) de l'élément de coincement (9) obturant cette fente (13) sur son côté ouvert.

2. Enjoliveur selon la revendication 1, caractérisé par le fait que l'appendice de retenue (14) est disposé à proximité de la zone de cintrage (15) de la languette de 5 coincement (10), et est repoussé hors de l'élément de coincement (9), en direction du centre du disque ; et par le fait que la bague de soutien (12) est appliquée, sur l'élément de coincement (9), du côté tourné vers le centre du disque.

3. Enjoliveur selon la revendication 1, caractérisé par le fait que l'appendice de retenue (19) ceinture la bague de soutien (12), en forme de crochet.

4. Enjoliveur selon l'une ou plusieurs des revendications 1-3, caractérisé par le fait que la bague de soutien (12) et les extrémités d'appui (16) des languettes de coincement (10) se trouvent sensiblement dans le même plan radial.

5. Enjoliveur selon l'une des revendications 1-4, caractérisé par le fait que la languette de coincement (10) est conçue, dans la continuité du cintrage (31), à la manière d'un arc de courbure identique, mais toutefois plus petite, l'extrémité libre de la languette de coincement (10) étant configurée en un jambage d'appui (37) opposé à l'extrémité de retenue (32), et la languette de coincement (10) présentant, dans la zone située entre le cintrage (31) et son espacement maximal de l'extrémité de retenue (32), des talons de retenue (38) qui sont tournés à l'opposé de l'extrémité de retenue (32).

6. Enjoliveur selon la revendication 5, caractérisé par le fait que la longueur de la languette de coincement (10) correspond approximativement à la longueur de l'extrémité de retenue (32).

7. Enjoliveur selon la revendication 5 ou 6, caractérisé par le fait que les talons de retenue (38) sont cintrés triangulairement, ainsi qu'au-delà de la zone des bords latéraux de la languette de coincement (10).

8. Enjoliveur selon l'une des revendications 5-7, caractérisé par le fait que la languette de coincement (10) possède une largeur réduite dans la région comprise entre les talons de retenue (38) et le jambage d'appui (37).

9. Enjoliveur selon l'une des revendications 5-8, caractérisé par le fait que la languette de coincement (10) présente une fente longitudinale (39) dans la région située entre les talons de retenue (38) et le jambage d'appui (37).

FIG.1

FIG. 2

FIG. 3

FIG.4

16

10

15

11   9   11   14

6   FIG.5

7

13

8   17   12

9   11   7

FIG.6

8   17   17   8

4

5

21

20   18

19

12   FIG.7

FIG.8

FIG.9

FIG.10

FIG.11